# EUROPEAN PATENT APPLICATION

(11) **EP 1 913 807 A1**
(43) Date of publication of application: **23.04.2008**
(21) Application number: 06122365.7
(22) Date of filing: 16.10.2006
(51) Int. Cl.: A01G 3/02

(54) **Effort-saving gardening shears**

(71) Applicant: Natura Innovation Ltd., Port Louis (MU)
(72) Inventor: Hua, Shan Su, Jhongshan District 104, Taipei City (TW)
(74) Representative: Viering, Jentschura & Partner

(57) **Abstract**

A pair of effort-saving shears primarily comprises: a first shear element (10) having a combining portion (11) with a pivot hole (13) and a shear element combing hole (15) thereon, and a first handle (14) further attached to the first shear element (10); a second shear element (20) having combining portion (22) with a shear element combining hole (23); a handle shaft (30) axially positioned in a second handle (31) and having a combining portion (32) at one end; and effort-saving transmission assembly including a toothed block (41) fixed on one side of the combining portion (32) of the handle shaft (30), and a toothed hole (42) provided on the combining portion (22) of the second shear element (20), wherein the toothed hole (42) encloses and partially engages the toothed block (41) by parts of the teeth thereof; and wherein the combining portion (11) of the first shear element (10) overlaps the combining portion (22) of the second shear element (20); a pivot member (35), piercing through said pivot holes (13,33) to be placed between the toothed hole (42) and the toothed block (41); and a shear element combining pin (16) piercing through said shear element combining pin holes (15,23).

## Description

### BACKGROUND OF THE INVENTION

### 1. Technical Field

The present invention relates to gardening shears and, more particularly, to a pair of shears having an effort-saving assembly for one-hand holding and operating.

### 2. Description of Related Art

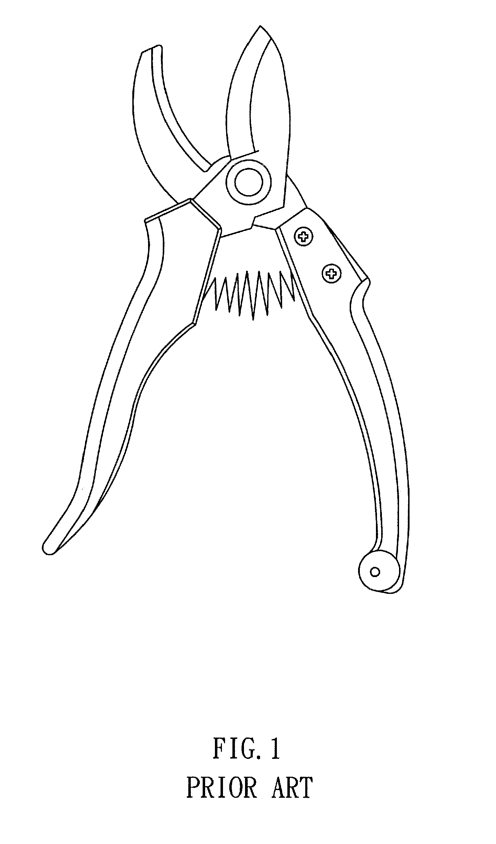

A pair of conventional gardening shears, as shown in **FIG. 1,** typically comprises two shear elements wherein one shear element may be movable while the other may be relatively fixed and the two shear elements are crosswise combined at a pivot member. Further, one handle may be attached to each shear element at the end beyond said pivot member. When operating such conventional gardening shears, a user squeezes both handles with single hand to drive the shear elements to approach each other and a shearing force can therefore be generated for pruning branches or stems of plants.

However, foresaid conventional gardening shears may have defects as described below.

Since the shearing force of the shears utterly is derived from the user's squeezing force exerted on the handles, the user may have to implement his extreme strength to operate the shears, and it can be difficult for the user to hole the handles stably while exerting such excessive squeezing force. Thus, such difficult operation may in turn render undesirable sway, shakiness or deviation of the shears during shearing and as a result, roughness or even tears may occur at the cut of objective branch.

Further, when the excessive shearing force is imposed on the branches or stems under said excessive squeezing force, an excessive counterforce may be correspondingly incurred from the sheared branch to damage the pivot member and detrimental clearance between the shear elements may successively arise to weaken the shearing force of the shears. Eventually, the shears can undesirably become unusable soon.

### SUMMARY OF THE INVENTION

The present invention has been accomplished under the circumstances in view to provide a pair of effort-saving shears which primarily comprises:
a first shear element having a blade portion at one end, a combining portion at the opposite end comprising a pivot hole and a shear element combining hole, and a first handle further attached to the first shear element;
a second shear element having a blade portion at one end, and a combining portion at the opposite end comprising a shear element combining hole;
a handle shaft axially positioned within a second handle and having a combining portion at one end;
an effort-saving transmission assembly including a toothed block fixed on one side of the combining portion of the handle shaft, and a toothed hole provided on the combining portion of the second shear element, wherein the toothed hole and toothed block include a tooth respectively, and the combining portion of the second shear element overlaps the combining portion of the handle shaft to make the toothed hole enclose and engage the toothed block in part with the teeth of both the toothed hole and toothed block while the combining portion of the first shear element overlaps the combining portion of the second shear element;
a pivot member, piercing through the pivot holes of the first shear element and the handle shaft, and being positioned between the toothed hole and the toothed block based on the sides thereof opposite to the teeth thereof; and
a shear element combining pin, piercing through the shear element combining hole of said first and second shear elements.

It is one object of the present invention to provide a pair of one-hand operating shears equipped with an effort-saving transmission assembly to achieve effortless operation of the gardening shears.

It is another object of the present invention to provide a pair of effort-saving gardening shears characterized by the stable, smooth and durable operation which is accomplished by utilizing the variation of the engagement between the teeth of the toothed block and the toothed hole of the effort-saving transmission assembly to scatter the shearing force and counterforce imposed on the pivot member of the shears.

It is still another object of the present invention to provide a pair of effort-saving gardening shears which are secured against overextending or improper closing because the full open angle and close angle thereof are confined by said effort-saving transmission assembly.

### BRIEF DESCRIPTION OF THE DRAWINGS

Figure 1 is a plan view of a pair of conventional gardening shears;
Figure 2 is a first exploded view of the effort-saving shears according to the present invention;
Figure 3 is a second exploded view of the effort-saving shears according to the present invention;
Figure 4 is a plan view of the effort-saving shears according to the present invention showing the shears relatively reciprocally opening;
Figure 5 is a plan view of the effort-saving shears according to the present invention showing the shears relatively reciprocally closed;
Figure 6 is a first t applied view of the effort-saving shears according to the present invention;
Figure 7 is a second applied view of the effort-saving shears according to the present invention; and
Figure 8 is a third applied view of the effort-saving shears according to the present invention.

### DETAILED DESCRIPTION OF THE PREFERRED EMBODIMENT

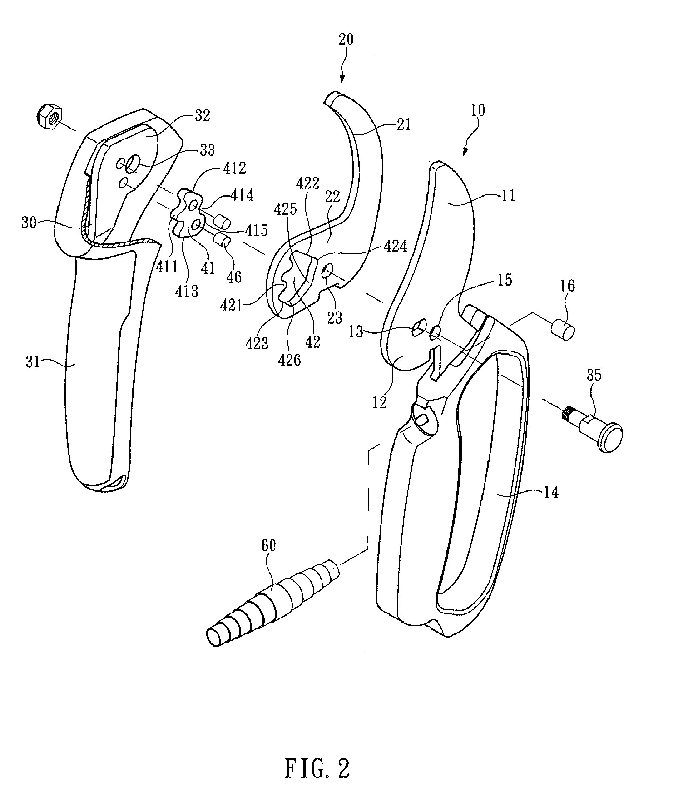

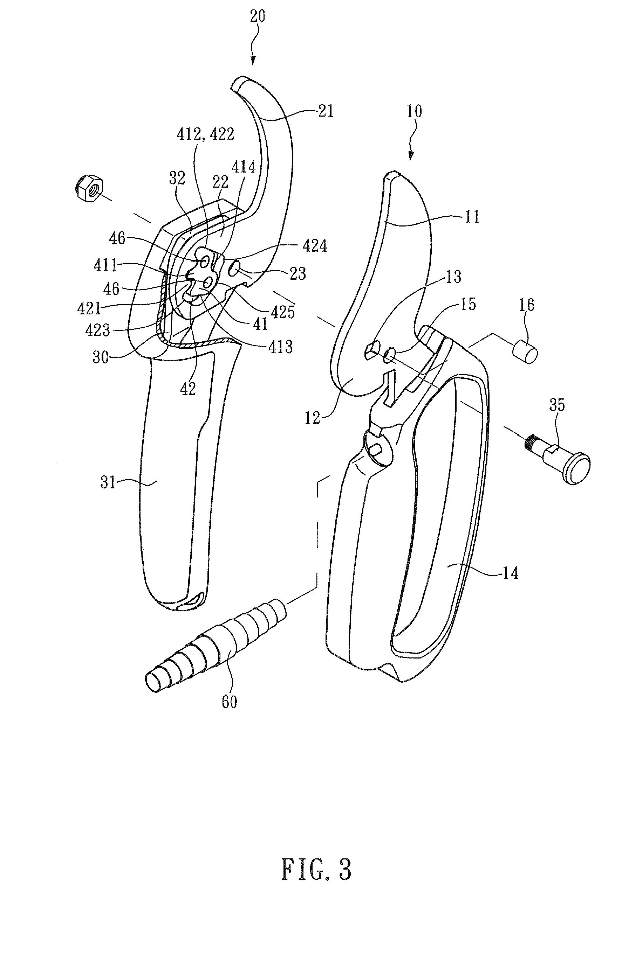

As shown in **Figures 2** and **3,** an embodiment of the disclosed effort-saving shears primarily comprises:
a first shear element **10** having a blade portion **11** at one end, a combining portion **12** at the opposite end comprising a pivot hole **13** and a shear element combining hole **15,** and a first handle **14** further attached to the first shear element **10;**
a second shear element **20** having a blade portion **21** at one end, and a combining portion **22** at the opposite end comprising a shear element combining hole **23;**
a handle shaft **30** axially positioned within a second handle **31** and having a combining portion **32** at one end which includes a pivot hole **33** thereon;
an effort-saving transmission assembly including a toothed block **41** fixed on one side of the combining portion **32** of the handle shaft **30,** and a toothed hole **42** provided on the combining portion **22** of the second shear element **20,** wherein the combining portion **22** of the second s hear element **20** overlaps the combining portion **32** of the handle shaft **30** to make the toothed hole **42** enclose the toothed block **41** while the combining portion **12** of the first shear element **10** overlaps the combining portion **22** of the second shear element **20;** a pivot member **35 ,** piercing through the shell of the second handle **31,** pivot holes **13, 33** of the first shear element **10** and the handle shaft **30** and being positioned between the toothed hole **42** and the toothed block **41;** a shear element combining pin **16,** piercing through the shear element combining hole **15, 23** of said first and second shear elements **10, 20;** and
a compression spring **60** provided between the first handle **14** and the second handle **31.**

It is to be particularly described that said toothed block **41** is fastened to the side of the combining portion **32** of the handle shaft **30** by two positioning members **46.** Said toothed hole **42** and toothed block **41** each has a tooth **411, 421** at one side correspondingly and said teeth **411, 421** can be engaged with each other in part. Further, in the toothed hole **42,** the two sidewalls adjacent to said tooth **421** are herein relatively defined as a first retaining edge **422** and a second retaining edge **423.** On the toothed block **41,** the two sidewalls adjacent to said tooth **411** are herein relatively defined as a first block edge **412** and a second block edge **413.** A first positioning recess **424,** a second positioning recess **425** and a receiving corner **426** are provided at one side of the toothed hole **42** opposite to the side where the tooth **421** is positioned. A recess **414** is provided on the toothed block **41** at the side proximal to said first positioning recess **424** and second positioning recess **425.** The block **41** further has a vertex **415** corresponding to said receiving corner **426.** Subject to the operating states of the shears, the foresaid pivot member **35** may be held between the recess **414** and the first positioning recess **424** or between the recess **414** and the second positioning recess **425** of which the reason will be further illustrated below.

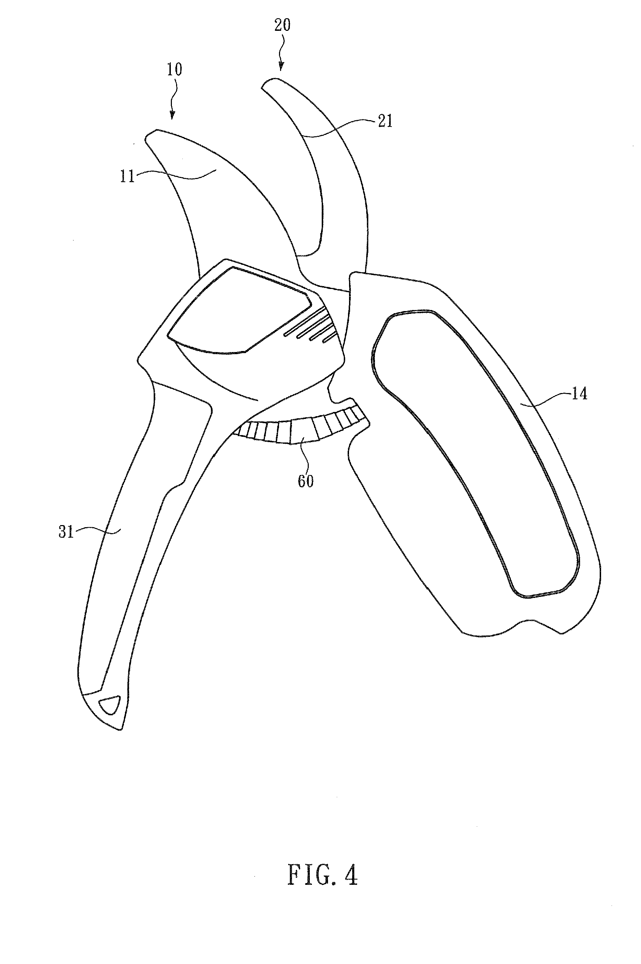

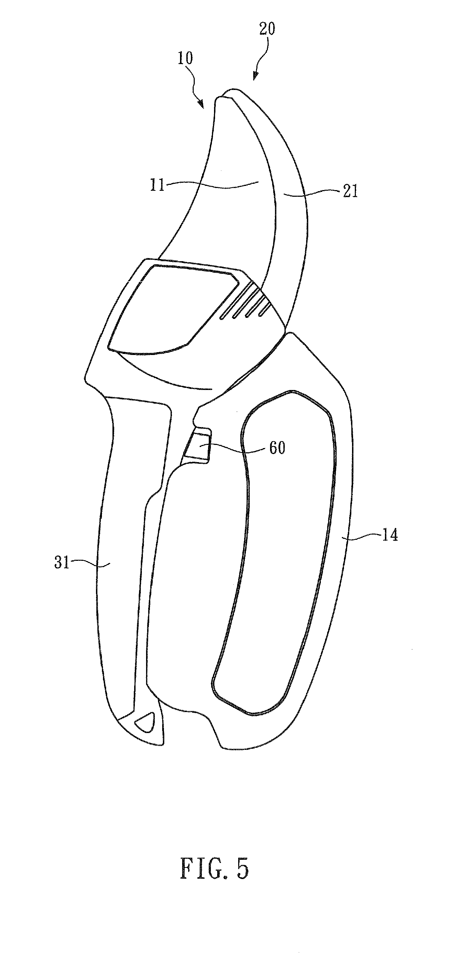

In **Figures 4** and 5, the appearance of the exemplificative shears according to the present invention can be seen. The upper end of the second handle **31** is actually enveloping said effort-saving transmission assembly and the combining portions **12, 22** of the first and second shear element **10, 20** while it is to be clarified that the upper end of the second handle **31** is partially exploded in **Figures 2** and **3** for clearly expressing the relationship among said components.

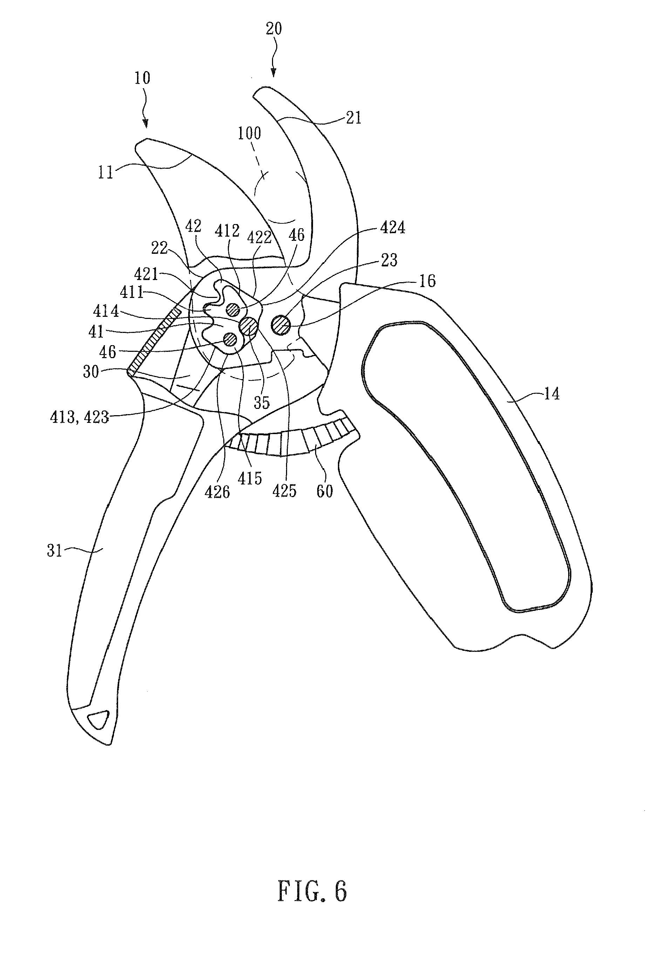

**Figures 6, 7 and 8** are provided for illustrating the operation of the disclosed subject matter.

In **FIG. 6,** the shear elements are now relatively stretched for containing a branch **100** of a plant therebetween. Thus, the first and second handles **14, 32** appear apart; the pivot member **35** is positioned between the second positioning recess **425** and recess **414;** the toothed block **41** and toothed hole **42** are partially engaged with part of the teeth **411, 421** thereof; the second block edge **413** of the toothed block **41** is pressing against the second retaining edge **423** of the toothed hole **42** and the vertex **415** of the toothed block **41** is received by the receiving corner **426** of the toothed hole **42.** Under this status, the shear elements are now farthest extended.

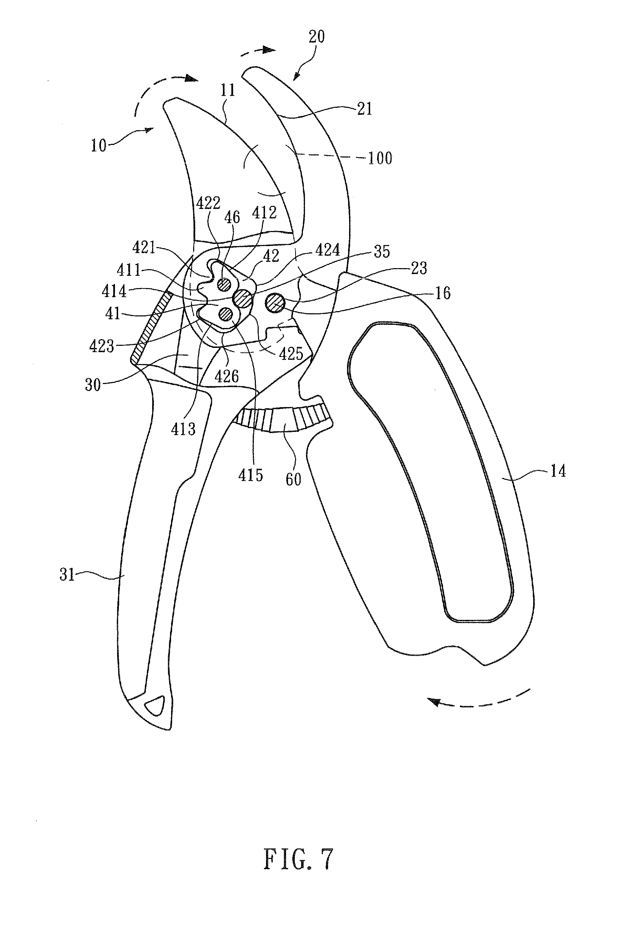

In **FIG. 7,** when the first handle **14** and second handle **31** are squeezed toward each other, the first shear element **10** is pivoting on the pivot member **35** and the shear element combining pin **16** is drawing the second shear element **20** to slightly swing in a clockwise direction. Then the blade portion **11** of the first shear element **10** can cut into the branch **100** of the plant by a clockwise revolving movement.

Meantime, the swinging motion of the second shear element **20** causes a variation in the engagement of the teeth **411, 421** of the toothed block **41** and toothed hole **42.** The first positioning recess **424** of the toothed hole **42** moves toward the pivot member **35** under the swinging of the second shear element **20,** and the second positioning recess **425** of the toothed hole **42** moves toward the vertex **415** of the toothed block **41.** The toothed block **41** and toothed hole **42** always remain mutually clenched in part under such variation.

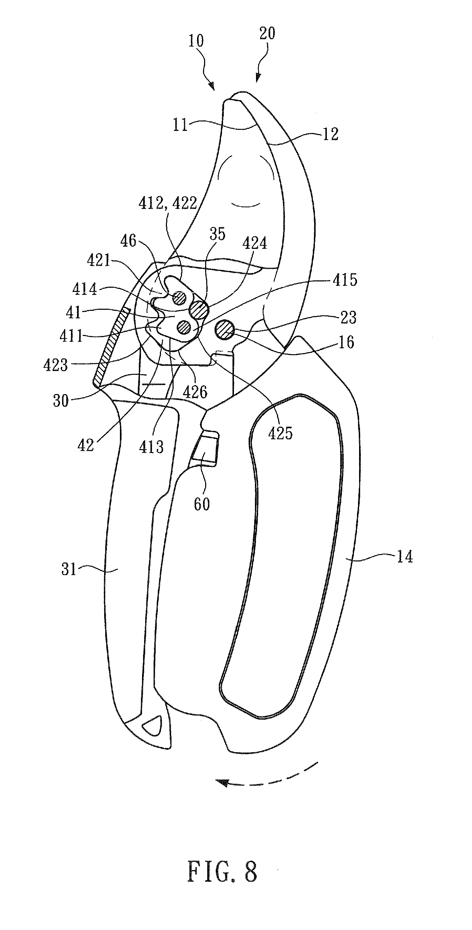

In **FIG. 8,** the first handle **14** and second handle **31** are further squeezed toward each other and foresaid components are keeping moving until the branch **100** completely cut off by the blade portions **11, 21.** At this time, the toothed block **41** and toothed hole **42** are engaged mutually with different parts of the teeth **411, 421** thereof; the first block edge **412** of the toothed block **41** is pressing on the first retaining edge **422** of the toothed hole **42;** the vertex **415** of the toothed block **41** is received by the second positioning recess **425;** the pivot member **35** is positioned between the recess **414** of the toothed block **41** and first positioning recess **424** of the toothed hole **42.** Thus the first and second shear elements **10, 20** are at an extremely close position.

Using the disclosed shears to shear a branch or stem of a plant, the effort-saving transmission assembly moves as described in **Figures 6, 7 and 8,** so that the squeezing force acting on the first and second handles **14, 31** can be amplified on the first and second shear elements **10, 20** due to the engagement of the teeth. Therefore, comparing with conventional shears, the disclosed shears provide effortless operation. Since a user is permitted to operate the shears with less effort, the operation can be assured with stability, therefore, the undesirable sway, shakiness or deviation can be eliminated, and in turn the smooth cuts can be achieved.

Further, by using the disclosed shears to shear a branch or stem of a plant, due to the effect of the effort-saving transmission assembly, the pivot assembly 35 can be assured from damage caused by counterforce emitted from the branch. Therefore the closeness and shearing force between the two shear elements **10, 20** can be ensured.

Also, the effort-saving transmission assembly of the present invention restricts the full open and close angles of the shear elements and prevents the shear elements from excessive opening or improper closing by utilizing the engagement between the first block edge **412** and first retaining edge **422** as well as the second block edge **413** and second retaining edge **423.**

Besides being a fulcrum where the shear elements pivot to open or close on, the pivot member **35** of the effort-saving transmission assembly has an additional function as a packing between the toothed hole **42** and tooth block **41** to make the teeth **411, 421** engage closely with each other so that the squeezing force acting on the handles **14, 31** can be efficiently transmitted to the first and second shear elements **10, 20.**

Although a particular embodiment of the invention has been described in detail for purposes of illustration, it will be understood by one of ordinary skill in the art that numerous variations will be possible to the disclosed embodiments without going outside the scope of the invention as disclosed in the claims.

## Claims

1. A pair of effort-saving shears primarily comprising:
a first shear element having a blade portion at one end, a combining portion at the opposite end comprising a pivot hole and a shear element combining hole, and a first handle further attached to the first shear element;
a second shear element having a blade portion at one end, and a combining portion at the opposite end comprising a shear element combining hole;
a handle shaft axially positioned in a second handle and having a combining portion at one end;
an effort-saving transmission assembly including a toothed block fixed on one side of the combining portion of the handle shaft, and a toothed hole provided on the combining portion of the second shear element, wherein the toothed hole and toothed block have a tooth respectively, and wherein the combining portion of the second shear element overlaps the combining portion of the handle shaft to make the toothed hole enclose and partially engage the toothed block by parts of the teeth thereof, while the combining portion of the first shear element overlaps the combining portion of the second shear element;
a pivot member , piercing through the pivot holes of the first shear element and the handle shaft to be placed between the toothed hole and the toothed block far from said teeth; and
a shear element combining pin piercing through the shear element combining holes of the first and second shear elements.

2. The effort-saving shears as claimed in Claim I, wherein, the two sidewalls of the toothed hole adjacent to said tooth are a first retaining edge and a second retaining edge while the two sidewalls of the toothed block adjacent to said tooth are a first block edge and a second block edge s o that when the first and second shear elements are opened at a predetermined angle, the second block edge of the toothed block presses on the second retaining edge of the toothed hole; when the first and second shear elements are closed, the first block edge of the toothed block presses on the first retaining edge of the toothed hole.

3. The effort-saving shears as claimed in Claim 2, wherein, a first positioning recess, and a second positioning recess are provided at one side of the toothed hole far from the tooth; and a recess is provided on the toothed block at the side far from the tooth; so that when the first and second shear elements are opened at a predetermined angle, the pivot member is held between the recess and second positioning recess; when the first and second shear elements are closed, the pivot member is held between the recess and first positioning recess.

4. The effort-saving shears as claimed in Claim 3, wherein, the toothed hole has a receiving corner adjacent to the second retaining edge and opposite to the tooth thereof and the toothed block has a vertex so that when the first and second shear elements are opened at a predetermined angle, the vertex is received by the receiving corner; when the first and second shear elements are closed, the vertex is received by the second positioning recess.

5. The effort-saving shears as claimed in Claim 1, wherein, a compression spring is provided between the first handle and the second handle.
